# EUROPEAN PATENT SPECIFICATION

(11) **EP 1 908 567 B1**
(45) Date of publication and mention of the grant of the patent: **26.09.2012**
(21) Application number: 07117381.9
(22) Date of filing: 27.09.2007
(51) Int. Cl.: B29C 43/00, B29K 105/04

(54) **Process of manufacturing stoppers from agglomerate containing cork powder**
Verfahren zur Herstellung von Korkstopfern aus einem Agglomerat mit Korkpulver
Procédé de la fabrication de bouchons à base de poudre liège agglomérée

(30) Priority: 03.10.2006 BR PI0604459
(43) Date of publication of application: 09.04.2008
(73) Proprietor: Coelho, José Norberto Pinto, 13218-630 City of Jundiai, Sao Paulo (BR); Coelho, Thiago José Pelin, 13218-630 City of Jundiai, Sao Paulo (BR); Coelho, Flavia de Maio, 13218-630 City of Jundiai, Sao Paulo (BR)
(72) Inventor: Coelho, José Norberto Pinto, 13218-630 City of Jundiai, Sao Paulo (BR); Coelho, Thiago José Pelin, 13218-630 City of Jundiai, Sao Paulo (BR); Coelho, Flavia de Maio, 13218-630 City of Jundiai, Sao Paulo (BR)
(74) Representative: Wablat, Wolfgang

(56) References cited:
- WO-A-03/004367
- WO-A-2005/003216
- DE-A1- 19 849 149
- FR-A- 2 799 183

## Description

The present invention Patent Application refers to a process of stopper acquisition from an agglomeration and combination of mixed materials (cork powder with EVA or rubber in general or polyolefin resin or thermoplastic resin or other types of resins in general, expander and crosslinker), as well the resulting product obtained thereof, meant to be used on bottle sealing and similar products, to which an innovating and original constructive disposition was given, totally setting itself apart from other similar products on the market, including the usually employed fabrication processes.

Therefore, it has in the Patent Application in question a especially elaborated stopper acquisition process, developed towards obtaining a huge practicability, bringing great advantages in its fabrication and it use, notably in regards to a better use of residues from cork transformation, which will not have to be burned or discarded anymore or randomly disposed in the environment, solving, as well, the well known and increasing controversial problems of environment order.

The use of the mixed material in acquiring hybrid stoppers will also involve greater savings and awareness in the use of cork, favoring ecology and nature, not to mention the increase of the already known resilient properties of this raw material; once it is aggregated to thermoplastic materials, it will result in a final solid, impermeable, flexible, elastic product of great resistance and perfect dimensional stability.

As is commonly known and mainly by those used to the technique, cork is a rugous bark extracted from the popularly tree known as "Cork Tree", made up of small air-containing cells and covered by layers of cellulous tissue, wax and suberins, revealing itself as a light material that does not decompose due to liquids or gases; it is resistant to fire and is thermally and acoustically insulated, along with a series of other proprieties that make it possible its use in many different applications.

FR 2 799 183 A1 describes an agglomerate, which is a mixture of cork and an organic binder. The organic binder has to have an open cell alveolar structure. Thus, it must be a polymer in combination with a foaming agent, which is capable to react with the polymer. The polymer has to have at least a nucleophilic and/or an electrophilic function, The basic composition comprises polyurethane, water, silicone and latex. Due to this composition, it is impossible to use very fine grained cork powder, i.e. a cork powder having a grain size below 0,048 mm. Such a fine grained cork powder could not be used because it would not totally dissolve.

WO 2005/003216 A discloses a process for the production of composite agglomerates. The document refers to the recycling of waste materials. Cork powder, which is mentioned, comes from the use of waste from polishing of conventional cork covers. The cork grain has to have a grain size of 1-2 mm, i.e. cork powder having a grain size between 0,595 to 0,048 mm cannot be used.

This way, and from the development and technological advances that have been taking place over recent decades, especially in sciences and in the use of new materials, along with the concern about the optimization of fabrication processes, that this present "Acquisition process of stoppers from mixed material agglomerate" was thought of, whose main stages and basic procedures adopted until the resulting final product are described is obtained as defined in claims 1 and 2, respectively.

Moreover, all process described in the present Patent Application also includes the great advantage of a better use of the cork in industrial residues, originated from the finishing of the stoppers, which are always polished with sandpaper; which cork powder with grain sizes from 0,595 to 0,048 mm, cannot be used in the traditional fabrication process and are usually sent for burning.

It must be added that, while the present claims were described with reference to the intended modality, it will be clear to those used to the technique that other modifications can be made here without distance itself from the spirit and purpose of what is being claimed now.

Thus, it is understandable that the process and its respective resulting product show itself to be extremely simple in its formulation, presenting easy feasibility and offering excellent results both of a practical and functional order over the conventional existing ones, therefore fully deserving the privilege of the invention now being claimed.

## Claims

1. An acquisition process of stoppers from mixed material agglomerate, wherein a mixture called mass is used, resulting from the agglomeration and mixture of cork powder with EVA or rubbers in general or polyolefin resins or thermoplastic resins or other types of resins in general, crosslinker and expander, wherein cork powder predominates, **characterized in that**
- the cork powder has a grain size between 0,595 to 0,048 mm;
- the mass is processed in an agglomerating equipment where a homogenized mass is produced;
and that
- the homogenized mass later passes through a cylindrical extruder in order to homogenize the mixture even more, producing rollers according to the measurement of the stopper that it is intended to be made,
- which are finished, expanded and reticulated in a press machine, where they may be pressed either horizontally or vertically, so, that already reticulated rollers are obtained;
- which are then polished, acquiring a final, velvety finishing, and
- which are later severed into any dimensional shapes.

2. An acquisition process of stoppers from mixed material agglomerate, wherein a mixture called mass is used, resulting from the agglomeration and mixture of cork powder with EVA or rubbers in general or polyolefin resins or thermoplastic resins or other types of resins in general, crosslinker and expander, wherein cork powder predominates, **characterized in that**
- the cork powder has a grain size between 0,595 to 0,048 mm;
- the mass is processed in an agglomerating equipment where a homogenized mass is produced and
- that the agglomerated and homogenized mass is shaped in expanded and crosslinked plates, from which, through drills, molds, and/or suitable tool equipment, the corks are obtained in the desired measures.

## Patentansprüche

1. Verfahren zur Beschaffung von Stopfen aus gemischtem Materialagglomerat, wobei eine Masse genannte Mischung verwendet wird, die aus der Agglomeration und Mischung von Korkpulver mit EVA oder Kautschuken allgemein oder Polyolefinharzen oder Thermoplastharzen oder anderen Typen von Harzen allgemein, Vernetzungsmittel und Expandiermittel resultiert, wobei das Korkpulver überwiegt,
**dadurch gekennzeichnet, dass**
- das Korkpulver eine Korngröße zwischen 0,595 und 0,048 mm aufweist;
- die Masse in einer Agglomerierungsvorrichtung verarbeitet wird, wobei eine homogenisierte Masse hergestellt wird;
und dass
- die homogenisierte Masse später durch einen zylindrischen Extruder hindurchgeht, um die Mischung noch weiter zu homogenisieren, wodurch Rollen den Maßen des Stopfens, der gefertigt werden soll, entsprechend hergestellt werden,
- die fertiggestellt, expandiert und in einer Pressmaschine vernetzt werden, wo sie entweder horizontal oder vertikal gepresst werden, so dass schon vernetzte Rollen erhalten werden;
- die dann poliert werden, wodurch sie eine endgültige, samtige Oberflächenbeschaffenheit erlangen, und
- die später zu beliebigen dimensionalen Gestalten getrennt werden.

2. Verfahren zur Beschaffung von Stopfen aus gemischtem Materialagglomerat, wobei eine Masse genannte Mischung verwendet wird, die aus der Agglomeration und Mischung von Korkpulver mit EVA oder Kautschuken allgemein oder Polyolefinharzen oder Thermoplastharzen oder anderen Typen von Harzen allgemein, Vernetzungsmittel und Expandiermittel resultiert, wobei das Korkpulver überwiegt,
**dadurch gekennzeichnet, dass**
- das Korkpulver eine Korngröße zwischen 0,595 und 0,048 mm aufweist;
- die Masse in einer Agglomerierungsvorrichtung verarbeitet wird, wobei eine homogenisierte Masse hergestellt wird,
und dass
- dass die agglomerierte und homogenisierte Masse in Form expandierter und vernetzter Platten gestaltet wird, aus denen die Korken durch Bohrer, Formen und/oder geeignete Werkzeugvorrichtungen in den gewünschten Maßen erhalten werden.

## Revendications

1. Procédé d'acquisition de bouchons à partir d'un agglomérat de matériaux mélangés, dans lequel un mélange appelé masse est utilisé, résultant de l'agglomération et du mélange d'une poudre de liège avec de l'EVA ou les caoutchoucs en général ou des résines polyoléfiniques ou des résines thermoplastiques ou d'autres types de résines en général, un agent de réticulation et un agent d'expansion, dans lequel la poudre de liège est prédominante,
**caractérisé en ce que**
- la poudre de liège a une taille de grain de 0,595 à 0,048 mm ;
- la masse est traitée dans un équipement d'agglomération dans lequel une masse homogénéisée est produite ;
et **en ce que**
- la masse homogénéisée passe ensuite dans une extrudeuse cylindrique afin d'homogénéiser encore plus le mélange, produisant des rouleaux aux mesures du bouchon que l'on souhaite préparé,
- qui sont finis, expansés et réticulés dans une presse, où ils peuvent être pressés horizontalement ou verticalement, afin d'obtenir des rouleaux déjà réticulés ;
- qui sont ensuite polis, offrant un fini final velouté, et
- qui sont ensuite coupés en n'importe quelles formes dimensionnelles.

2. Procédé d'acquisition de bouchons à partir d'un agglomérat de matériaux mélangés, dans lequel un mélange appelé masse est utilisé, résultant de l'agglomération et du mélange d'une poudre de liège avec de l'EVA ou les caoutchoucs en général ou des résines polyoléfiniques ou des résines thermoplastiques ou d'autres types de résines en général, un agent de réticulation et un agent d'expansion, dans lequel la poudre de liège est prédominante,
**caractérisé en ce que**
- la poudre de liège a une taille de grain de 0,595 à 0,048 mm ;
- la masse est traitée dans un équipement d'agglomération dans lequel une masse homogénéisée est produite ;
et **en ce que**
- la masse agglomérée et homogénéisée est façonnée en plaques expansées et réticulées, à partir desquelles, par le biais de perceuses, moules et/ou un outil approprié, les bouchons sont obtenus aux mesures souhaitées.
